# EUROPEAN PATENT SPECIFICATION

(11) **EP 3 109 175 B1**
(45) Date of publication and mention of the grant of the patent: **27.05.2020**
(21) Application number: 14908439.4
(22) Date of filing: 18.12.2014
(51) Int. Cl.: B65D 1/00, C03B 11/10

(54) **GLASS CONTAINER AND ONE-PRESS MANUFACTURING METHOD FOR GLASS CONTAINERS**
GLASBEHÄLTER UND EIN-PRESSEN-HERSTELLUNGSVERFAHREN FÜR EINEN GLASBEHÄLTER
RÉCIPIENT EN VERRE ET PROCÉDÉ DE FABRICATION À UNE PRESSE POUR RÉCIPIENTS EN VERRE

(43) Date of publication of application: 28.12.2016
(73) Proprietor: Koa Glass Co. Ltd., Tokyo 132-0035 (JP)
(72) Inventor: DATE, Daisuke, Ichikawa-shi Chiba 271-0126 (JP)
(74) Representative: Müller-Boré & Partner Patentanwälte PartG mbB
(86) International application number: PCT/JP2014/083580
(87) International publication number: WO 2016/098229

(56) References cited:
- WO-A1-2010/016308
- WO-A1-2014/188614
- JP-A- S6 465 032
- JP-A- 2006 136 592
- JP-A- 2007 031 197

## Description

The present invention relates to a manufacturing method of a glass container that includes mouth portions formed at both end portions thereof facing each other and is integrally molded from the beginning by a one-press manufacturing method.

Conventionally, the designability of a container, which stores cosmetics, has been emphasized in terms of the stimulation of customer's willingness to buy.

Further, glass containers are widely used as containers for storing cosmetics (for example, see Patent Document 1 and Patent Document 2).

The reason for this is that glass containers are appropriately weighty and have a good texture and a high-class feeling not shared by plastic containers.

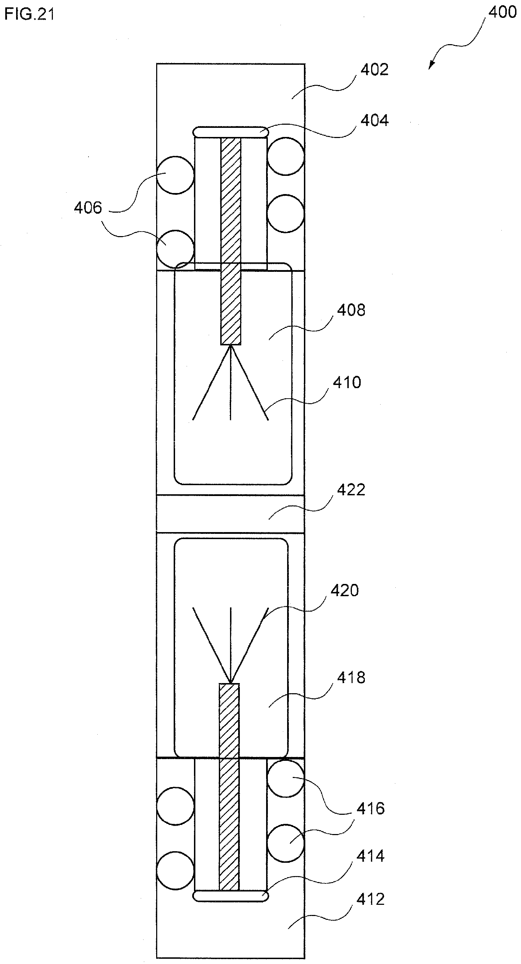

That is, Patent Document 1 discloses nail cosmetics using a transparent container 400 that includes openings at both ends thereof in the longitudinal direction as illustrated in Fig. 21. The openings have a structure to which caps (402, 412) are to be screwed, the caps (402, 412) to be screwed to the container 400 are provided with brush structures (410, 420) entering the container, a partition portion 422 is provided in the middle of the transparent container, and different types of finishing nail polish are stored in cosmetic storage portions (408, 418) that are partitioned by the partition portion 422.

Further, the transparent container 400 to be used is made of glass.

Furthermore, Patent Document 2 discloses a one-press manufacturing method as a manufacturing method of a thick glass container having a high-class feeling. The one-press manufacturing method includes: a pressing step of inserting a plunger into a finishing mold, which is filled with molten glass called a gob, to mold a finished-shaped glass container; and a cooling step of moving the finished-shaped glass container to a cooling mold and forcibly cooling the outer peripheral surface and the inner peripheral surface of the finished-shaped glass container by cooling air that is sent into the cooling mold and cooling air that is sent into the finished-shaped glass container.

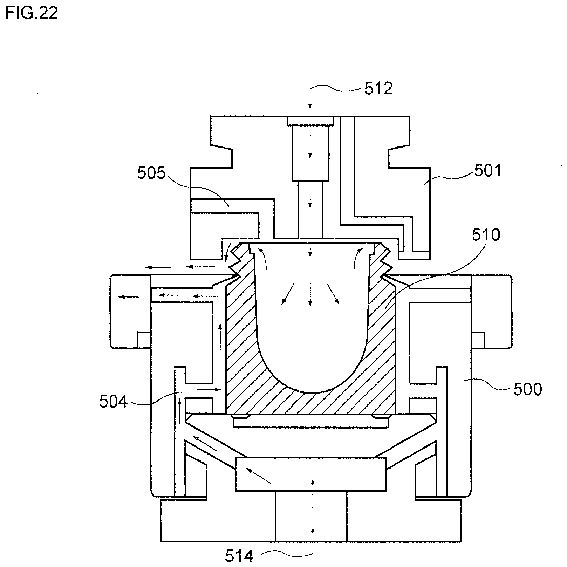

That is, there is disclosed a one-press manufacturing method of forcibly cooling the inner peripheral surface and the outer peripheral surface of a finished-shaped glass container 510 by using both cooling air 512 that is sent into the finished-shaped glass container 510 and cooling air 514 that is sent into a cooling mold 500 as illustrated in Fig. 22.

Further, JP S64 65032 A discloses a one-press manufacturing method of a glass container that includes a first mouth portion and a second mouth portion formed at both end portions thereof facing each other.

Patent Document 1: JP 2006-136592 A
Patent Document 2: JP 2000-211930 A

Since the glass container used for the nail cosmetics disclosed in Patent Document 1 includes openings at both ends thereof, it is said that the glass container has unique designability not shared by normal glass containers. However, the steps for manufacturing the glass container are complicated and the physical strength of the glass container is inferior.

That is, as apparent from Fig. 21, the glass container disclosed in Patent Document 1 is adapted so that the bottoms of two glass containers are fixed to both surfaces of the partition portion separately prepared.

Such fixing is considered to be performed by fixing with an adhesive, or by joining to each other two glass containers and a partition portion while the two glass containers or the partition portion are in a melted state, and integrating them with each other.

Accordingly, since several manufacturing steps are necessary even in any of these fixing aspects, these manufacturing steps are more complicated than the manufacturing steps of a normal glass container.

Moreover, since the mechanical strength at the boundary between the two glass containers and the partition portion is low even in any of the fixing aspects, the glass containers are easily separated from each other when a force equal to or larger than a predetermined force is applied to the glass containers.

Further, since the glass container disclosed in Patent Document 1 is adapted so that the inner diameter of a body portion is larger than the inner diameter of a mouth portion as apparent from Fig. 21, the glass container is manufactured by a blow-and-blow method or a press-and-blow method.

For this reason, in Patent Document 1, even though a parison including two openings may be formed if integral molding of a glass container is tried, it is not virtually possible to make the glass container have a finished shape by blowing air to the openings at the same time.

Further, since the glass container, which is obtained by the one-press manufacturing method disclosed in Patent Document 2, is certainly thick and has a predetermined high-class feeling, it is said that the glass container has designability to some extent. However, the glass container is included in the category of a normal glass container in view of the fact that the glass container includes one mouth portion.

Furthermore, the one-press manufacturing method disclosed in Patent Document 2 is a manufacturing method to obtain a finished-shaped glass container by only a one-time (one press) insertion of a plunger, which is used to mold the inner peripheral surface of the mouth portion, into the gob, which is received in the mold.

Accordingly, the manufacturing steps of the one-press manufacturing method are simple, but, with this one-press manufacturing method, it is not at all expected to manufacture a glass container having a complicated shape exceeding the category of a normal glass container, which includes mouth portions formed at both end portions thereof facing each other.

Accordingly, as a result of the earnest investigation into the above-mentioned problems, the inventors of the invention have found out a manufacturing method of a glass container, which includes mouth portions formed at both end portions thereof facing each other, by integrally molding the glass container from the beginning using a predetermined one-press manufacturing method, without separately manufacturing portions including the mouth portions and integrating these portions. The inventors thus completed the invention.

That is, the invention provides a manufacturing method of a glass container that includes mouth portions formed at both end portions thereof facing each other and is integrally molded from the beginning by a one-press manufacturing method.

According to an aspect of the present invention, there is provided a one-press manufacturing method of a glass container that includes a first mouth portion and a second mouth portion formed at both end portions thereof facing each other. The one-press manufacturing method includes the following steps (A) to (F):
(A) a step of fitting a funnel to a mold and then putting a gob in the mold through the funnel;
(B) a step of removing the funnel from the mold and then fitting a baffle, which includes a convex molding surface portion, to the mold so that the convex molding surface portion is inserted into the mold;
(C) a step of simultaneously molding an inner peripheral surface of the first mouth portion, which is formed by a molding surface portion of a plunger, and an inner peripheral surface of the second mouth portion, which is formed by the molding surface portion of the baffle, to mold a finished-shaped glass container from the gob by inserting the plunger into the mold from a side opposite to the side to which the baffle is fitted and pressing the gob;
(D) a step of extracting the plunger from the finished-shaped glass container;
(E) a step of removing the baffle from the mold while extracting the convex molding surface portion from the finished-shaped glass container;
(F) a step of transporting the finished-shaped glass container to a cooling mold and cooling the finished-shaped glass container,
wherein the mold includes a mold base and a mouth mold, each of which is divided into two parts, and
in the step (C), an outer peripheral shape of the first mouth portion is molded by the mouth mold, and
an outer peripheral shape of the second mouth portion is molded by an inner wall of an end portion of the mold base on the side to which the baffle is fitted, and
wherein cavities formed by hermetically sealing air are provided so as to surround the inner wall of the end portion of the mold base on the side to which the baffle is fitted.

That is, according to the one-press manufacturing method of a glass container of the present invention, the finished-shaped glass container is molded by using the baffle including the convex molding surface portion. Accordingly, the glass container, which includes the mouth portions formed at both end portions thereof facing each other, may be easily and integrally molded.

Moreover, in the one-press manufacturing method of a glass container according to the invention, the mold includes a mold base and a mouth mold each of which is divided into two parts, an outer peripheral shape of the first mouth portion is molded by the mouth mold, and an outer peripheral shape of the second mouth portion is molded by an inner wall of an end portion of the mold base on the side to which the baffle is fitted.

According to the one-press manufacturing method of a glass container, after the finished-shaped glass container, which includes the mouth portions formed at both end portions thereof facing each other, is molded, the finished-shaped glass container may be efficiently transported to the cooling mold.

Further, in the one-press manufacturing method of a glass container according to another aspect of the invention, it is preferable that the baffle is formed by fitting a rod-like member, which includes a convex molding surface portion, to a cylindrical member so that only the convex molding surface portion is exposed to the outside, the inner peripheral surface of the second mouth portion is molded by the convex molding surface portion, and an end face of the second mouth portion is molded by an end face of the cylindrical member where the convex molding surface portion is exposed.

According to the one-press manufacturing method of a glass container, since a molding surface portion used to mold the end face of the second mouth portion may be easily formed on the end face of the cylindrical member where the convex molding surface portion is exposed, the end face of the second mouth portion may be more accurately molded.

Furthermore, in the one-press manufacturing method of a glass container according to the invention, cavities formed by hermetically sealing air are provided so as to surround the inner wall of the end portion of the mold base on the side to which the baffle is fitted.

According to the one-press manufacturing method of a glass container, the second mouth portion may be more stably molded through the improvement of the heat-retaining property of the inner wall of the end portion of the mold base on the side to which the baffle is fitted.

Figs. 1A and 1B are diagrams illustrating a glass container.
Fig. 2 is a diagram illustrating the outline of a step (A) of a one-press manufacturing method of a glass container of the invention.
Fig. 3 is a diagram illustrating the outline of a step (B) of the one-press manufacturing method of a glass container of the invention.
Fig. 4 is a diagram illustrating the outline of a step (C) of the one-press manufacturing method of a glass container of the invention.
Fig. 5 is a diagram illustrating the outline of a step (D) of the one-press manufacturing method of a glass container of the invention.
Fig. 6 is a diagram illustrating the outline of a step (E) of the one-press manufacturing method of a glass container of the invention.
Figs. 7A to 7C are diagrams illustrating the outline of a step (F) of the one-press manufacturing method of a glass container of the invention.
Fig. 8 is a diagram illustrating a one-press manufacturing apparatus of a glass container.
Figs. 9A to 9C are diagrams illustrating a mold.
Figs. 10A and 10B are diagrams illustrating mold bases.
Figs. 11A and 11B are diagrams illustrating a mouth mold.
Figs. 12A and 12B are diagrams illustrating a guide ring.
Figs. 13A and 13B are diagrams illustrating an aspect in which the guide ring is received in the mouth molds.
Figs. 14A and 14B are diagrams illustrating a plunger.
Figs. 15A to 15C are diagrams illustrating a baffle.
Figs. 16A and 16B are diagrams illustrating another baffle.
Figs. 17A and 17B are diagrams illustrating still another baffle.
Fig. 18 is a diagram illustrating a blow head.
Fig. 19 is a diagram illustrating a cooling mold.
Figs. 20A and 20B are diagrams illustrating a bottom mold of the cooling mold.
Fig. 21 is a diagram illustrating a glass container in the related art.
Fig. 22 is a diagram illustrating a one-press manufacturing method in the related art.

### [First embodiment]

A first embodiment is a glass container that is integrally molded by a one-press manufacturing method and includes a first mouth portion and a second mouth portion formed at both end portions thereof facing each other.

The first embodiment will be specifically described below appropriately with reference to the drawings.

### 1. Shape

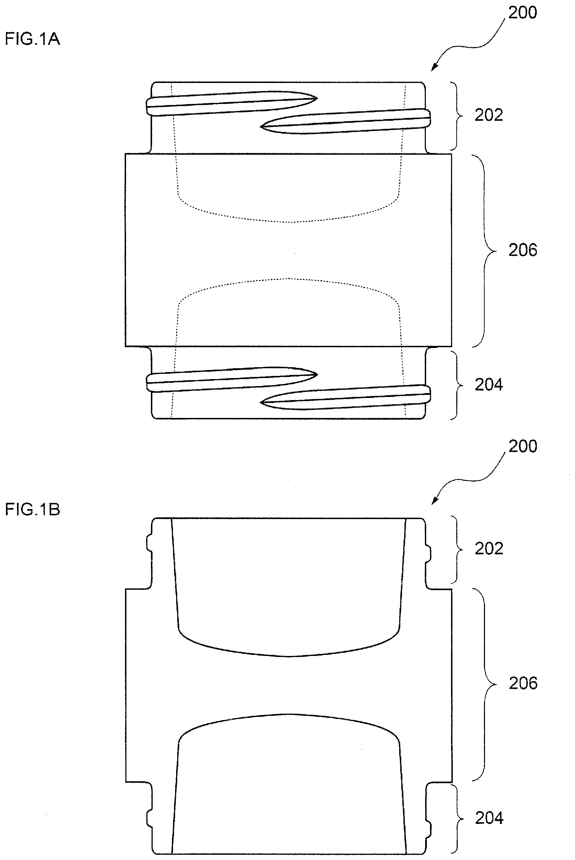

As illustrated in Figs. 1A and 1B, a glass container 200 obtainable by the method of the invention includes a first mouth portion 202 and a second mouth portion 204 formed at both end portions thereof facing each other.

The reason for this is that unique designability exceeding the category of a normal glass container may be obtained since the glass container includes the mouth portions (202, 204) formed at both end portions thereof facing each other as described above.

That is, particularly, when contents having different tones are stored in storage portions corresponding to the respective mouth portions in a case in which colorless transparent glass or the like is used as glass forming the glass container, the contents can be visually recognized from the outside of the glass container. Accordingly, various kinds of designability may be exerted by the contrast of the tones.

Further, since a cap is usually screwed to each of the mouth portions formed at both the end portions of the glass container, more various kinds of designability may be exerted by the combination with the shapes or colors of the caps.

Of course, it is characteristic of the shape of the glass container and the characteristic shape becomes the basis for the above-mentioned unique designability.

Further, the glass container also has the functional advantage of carrying two kinds of contents at one time.

Meanwhile, Fig. 1A is a front view of the glass container 200 and Fig. 1B is a cross-sectional view of the glass container 200 taken along a vertical direction.

Further, the shapes of the inner peripheral surfaces of the glass container on the side of the first mouth portion and the side of the second mouth portion are not particularly limited as long as they are capable of being formed by the extraction of molding surface portions of a plunger and a baffle without the deformation of a finished-shaped glass container.

Accordingly, the planar shape of the inner periphery of the glass container is not particularly limited, and may be, for example, a circular shape, an elliptical shape, or a polygonal shape.

Further, the diameters (the maximum diameters) of the inner peripheral surfaces of the glass container 200 on the side of the first mouth portion 202 and the side of the second mouth portion 204 are not particularly limited, but, usually, it is preferable that the diameters (the maximum diameters) of the inner peripheral surfaces of the glass container 200 are set to values within the range of 18 to 50 mm.

Furthermore, the depths of the inner peripheral surfaces of the glass container 200 on the side of the first mouth portion 202 and the side of the second mouth portion 204 are also not particularly limited, but, usually, it is preferable that the depths of the inner peripheral surfaces of the glass container 200 are set to values within the range of 25 to 50 mm.

Moreover, the thickness of the glass container 200 on the side of the first mouth portion 202 and the side of the second mouth portion 204 is also not particularly limited. However, usually, it is preferable that the thicknesses of the mouth portions (202, 204) are set to values within the range of 2.5 to 3.5 mm, and, usually, it is preferable that the thickness of a body portion 206 is set to a value within the range of 6 to 10 mm.

In addition, the distance between the bottoms of the inner peripheral surfaces of the glass container 200 on the side of the first mouth portion 202 and the side of the second mouth portion 204 is also not particularly limited, but, usually, it is preferable that the distance between the bottoms of the inner peripheral surfaces of the glass container 200 is set to a value within the range of 8 to 12 mm.

Meanwhile, the aspects of the glass container 200 on the sides of the above-mentioned first and second mouth portions 202 and 204 may be the same, that is, may be vertically symmetrical, or they may be different from each other.

Further, the external shape of the glass container is also not particularly limited, and the glass container may be, for example, a bottleneck-type glass bottle, a cylindrical glass bottle, or a rectangular glass box, according to use.

Furthermore, threads, which allow cap members to be screwed, may be formed on the outer surfaces of the first and second mouth portions 202 and 204.

Meanwhile, since the glass container is integrally molded by one press, the glass container may be more easily manufactured and the mechanical strength of the glass container may be improved in comparison with a case in which portions including the respective mouth portions are separately manufactured and then are integrated with each other.

Moreover, since the glass container is obtained by a one-press manufacturing method, the glass container may be easily made to be thick and have a high-class feeling.

Accordingly, a product, which is molded by a blow-and-blow method or a press-and-blow method, is not included in the scope of the invention.

In addition, a product in which bottoms of two glass containers are directly fixed to each other or are fixed to each other with another member interposed therebetween is also not included in the scope of the invention.

### 2. Materials

Further, the type of glass, which forms the glass container, is also not particularly limited, and may typically be a soda-lime glass, borosilicate glass, lead glass, phosphate glass, or aluminosilicate glass.

Furthermore, for the glass forming the glass container, it is preferable to use a colorless transparent glass, but it is also preferable to use a colored transparent glass or colored translucent glass.

The use of a colorless transparent glass makes it possible to sufficiently recognize the color of contents stored in the glass container from the outside and to more clearly recognize the color of the contents owing to the internal reflection of light.

Meanwhile, the use of a colored transparent glass or colored translucent glass makes it possible to obtain a glass container that is excellent in designability through the synergy between the tone of the contents and the tone of the glass owing to the internal reflection of light.

### [Second embodiment]

A second embodiment is a one-press manufacturing method of a glass container that includes a first mouth portion and a second mouth portion formed at both end portions thereof facing each other, and the one-press manufacturing method includes the following steps (A) to (F) :
(A) a step of fitting a funnel to a mold and then putting a gob in the mold through the funnel;
(B) a step of removing the funnel from the mold and then fitting a baffle, which includes a convex molding surface portion, to the mold so that the convex molding surface portion is inserted into the mold;
(C) a step of simultaneously molding an inner peripheral surface of the first mouth portion, which is formed by a molding surface portion of a plunger, and an inner peripheral surface of the second mouth portion, which is formed by the molding surface portion of the baffle, to mold a finished-shaped glass container from the gob by inserting the plunger into the mold from a side opposite to the side to which the baffle is fitted and pressing the gob;
(D) a step of extracting the plunger from the finished-shaped glass container;
(E) a step of removing the baffle from the mold while extracting the convex molding surface portion from the finished-shaped glass container;
(F) a step of transporting the finished-shaped glass container to a cooling mold and cooling the finished-shaped glass container.

The second embodiment of the invention will be specifically described below with with reference to the drawings.

### 1. Outline of one-press manufacturing method

A one-press manufacturing method of a glass container of the invention includes predetermined steps (A) to (F).

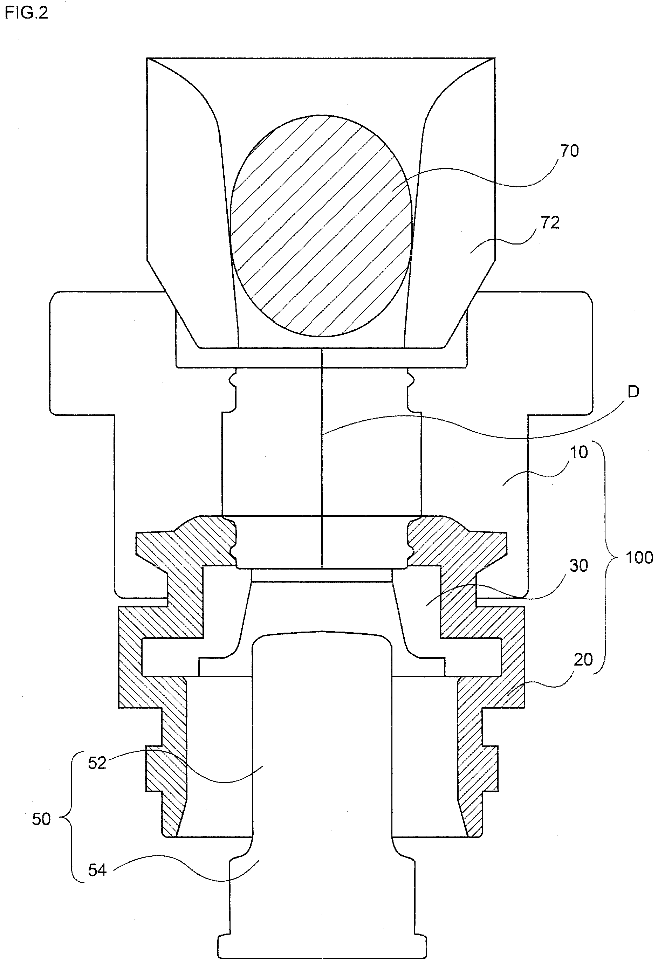

Accordingly, the outline of the respective steps will be described first with reference to Figs. 2 to 7, and, after that, a one-press manufacturing apparatus of a glass container and parts of this one-press manufacturing apparatus, such as a mold, a plunger, a funnel, a baffle, a blow head, and a cooling mold, will be specifically described.

Meanwhile, Figs. 2 to 7 are cross-sectional views that are obtained when the whole including a mold 100, a plunger 50, and the like is cut along a plane orthogonal to a cross-section where the mold 100 is divided into two parts and is opened and the cut surface thereof is viewed from the front.

### (1) Step (A)

The step (A) is a step of fitting a funnel 72 to the mold 100 and then putting a gob 70 in the mold 100 through the funnel 72 as illustrated in Fig. 2.

Meanwhile, a line D of Fig. 2 is a parting line when the mold 100 is divided into two parts and is opened.

### (2) Step (B)

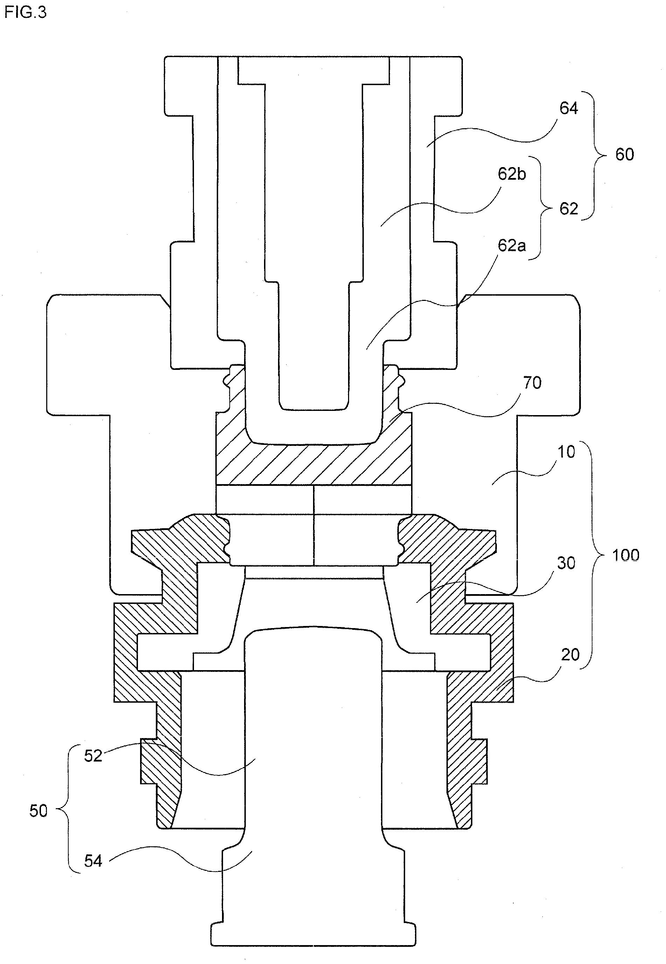

The step (B) is a step of removing the funnel 72 from the mold 100 and then fitting a baffle 60, which includes a convex molding surface portion 62a, to the mold 100 so that the convex molding surface portion 62a is inserted into the mold 100 as illustrated in Fig. 3.

Meanwhile, an aspect in which the convex molding surface portion 62a of the baffle 60 is completely inserted into the gob 70 is illustrated in Fig. 3, but this is for the convenience of description. Actually, the convex molding surface portion 62a does not necessarily need to be completely inserted into the gob in the step (B), and is usually completely inserted into the gob in the step (C).

### (3) Step (C)

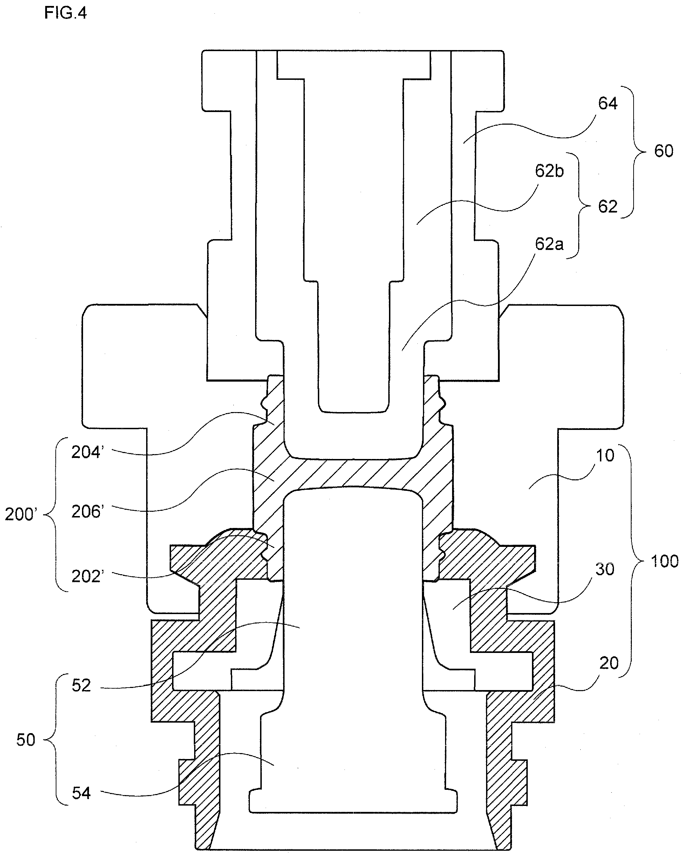

The step (C) is a step of simultaneously molding an inner peripheral surface of a first mouth portion 202', which is formed by a molding surface portion 52 of a plunger 50, and an inner peripheral surface of a second mouth portion 204', which is formed by the molding surface portion 62a of the baffle 60, to mold a finished-shaped glass container 200' from the gob 70 by inserting the plunger 50 into the mold 100 from a side opposite to the side to which the baffle 60 is fitted and pressing the gob 70 as illustrated in Fig. 4.

In the step (C), when the gob 70 is pressed by the plunger 50, the inner peripheral surfaces of the first and second mouth portions 202' and 204' are molded and the outer peripheral surfaces of the first and second mouth portions 202' and 204' and the outer peripheral surface of a body portion 206' are also molded.

Further, after the molding surface portion 52 of the plunger 50 is completely inserted into the gob 70, the state of the molding surface portion 52 is maintained just as it is until the surface of the gob 70 is cooled so as to hold a constant shape. As a result, the finished-shaped glass container 200' is molded.

### (4) Step (D)

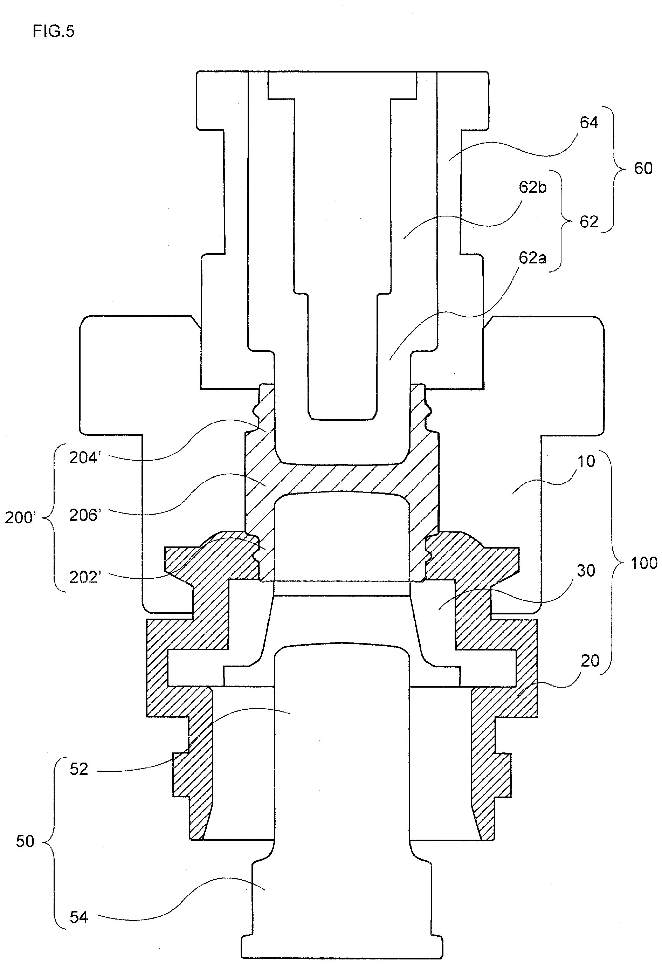

The step (D) is a step of extracting the plunger 50 from the finished-shaped glass container 200' as illustrated in Fig. 5.

That is, the step (D) is a step of extracting the plunger 50 from the finished-shaped glass container 200' by moving the plunger 50 down in a reverse order of an order of moving the plunger 50 up in the above-mentioned step (C).

### (5) Step (E)

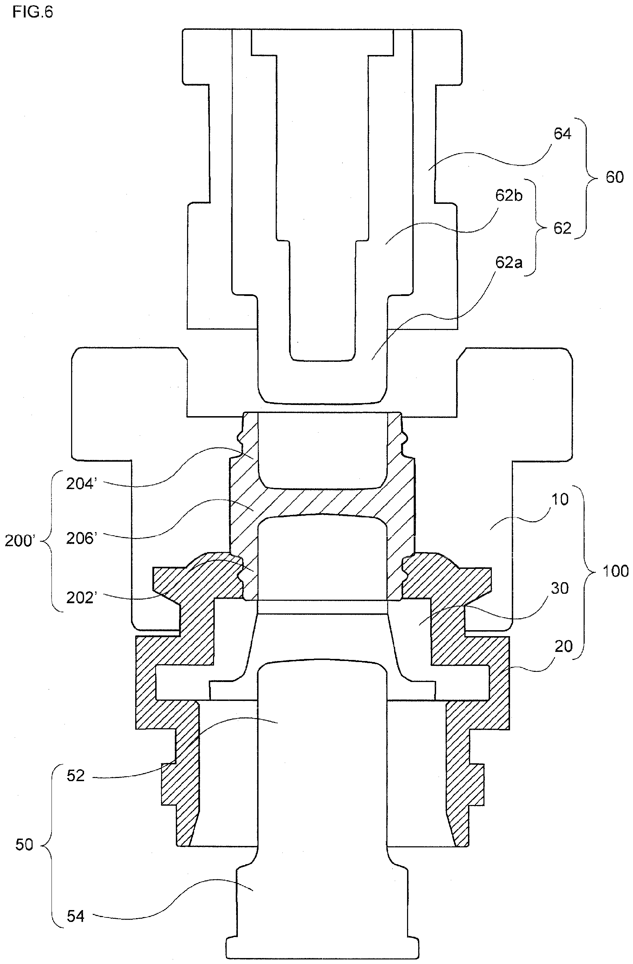

The step (E) is a step of removing the baffle 60 from the mold 100 while extracting the convex molding surface portion 62a from the finished-shaped glass container 200' as illustrated in Fig. 6.

That is, the step (E) is a step of extracting the baffle 60 from the finished-shaped glass container 200' and the mold 100 by moving the baffle 60 up in a reverse order of an order of moving the baffle 60 down to fit the baffle 60 to the mold 100 in the above-mentioned step (B).

### (6) Step (F)

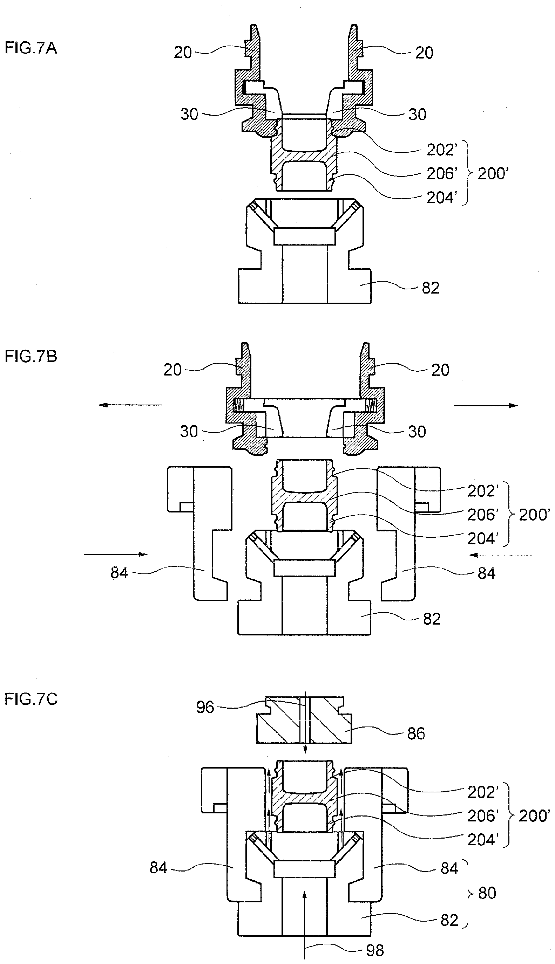

The step (F) is a step of transporting the finished-shaped glass container 200' to a cooling mold 80 and cooling the glass container as illustrated in Fig. 7.

More specifically, after the baffle 60 is removed, mold bases 10 are divided as two parts and are removed.

At this time, the first mouth portion 202' of the finished-shaped glass container 200' is pinched by mouth molds 20, which are connected to an arm (not illustrated), in a state in which the second mouth portion 204' faces the upper side.

Then, the arm is rotated about a fulcrum by an angle of 180° so that the finished-shaped glass container 200' is inverted, and the glass container 200' is moved to a position directly above a bottom mold 82, which is a part of the cooling mold 80, as illustrated in Fig. 7A.

After that, when the mouth molds 20 are divided as two parts and are opened as illustrated in Fig. 7B, the finished-shaped glass container 200' is made to drop by its own weight and is placed on the bottom mold 82.

Next, as illustrated in Fig. 7C, finishing molds 84, which are a part of the cooling mold 80 and are divided as two parts, are made to approach from both sides and the finished-shaped glass container 200' is received in the cooling mold 80.

After that, cooling air is supplied from the lower side of the bottom mold 82, and passes through gaps between the outer peripheral surface of the finished-shaped glass container 200' and the inner peripheral surfaces of the finishing molds 84 to the upper side from the lower side.

At the same time, cooling air is also blown to the inner peripheral surface of the first mouth portion 202' of the finished-shaped glass container 200' by a blow head 86 that is disposed above the finished-shaped glass container 200'.

Accordingly, the outer peripheral surface and the inner peripheral surface of the finished-shaped glass container 200' are simultaneously cooled, so that the finished-shaped glass container 200' becomes a final glass container 200.

### 2. Manufacturing apparatus of glass container

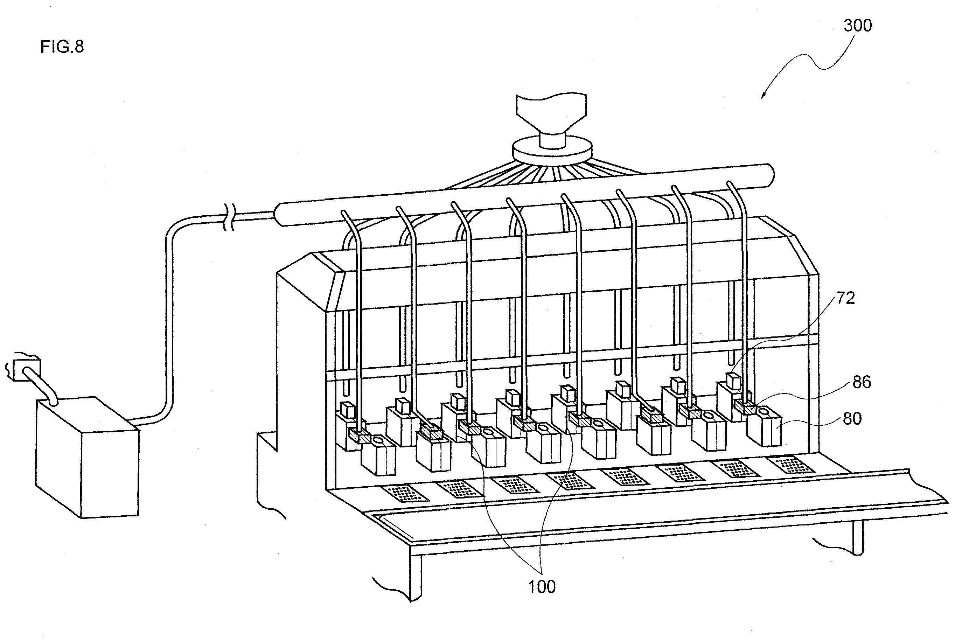

Basically, as illustrated in Fig. 8, an individual section machine (IS machine) 300 may be used as a one-press manufacturing apparatus of a glass container that performs the one-press manufacturing method of a glass container of the invention.

The IS machine uses a predetermined mold 100, and is adapted to cool a finished-shaped glass container, which is molded by the mold 100, by using first cooling air, which is blown from a blow head 86, and second cooling air, which is blown along the inner peripheral surfaces of the finishing molds 84, after transporting the finished-shaped glass container to a cooling mold 80.

That is, after molding a finished-shaped glass container by one press, the IS machine may manufacture a predetermined glass container by cooling the finished-shaped glass container in the cooling mold.

Accordingly, according to the IS machine, typically, a glass container 200, which is illustrated in Figs. 1A and 1B, is thick, has a highly decorative specific shape, and of which the mouth portion and the body portion have the same inner diameter, may be easily and continuously manufactured.

Meanwhile, Fig. 8 is a perspective view of the IS machine 300.

### (1) Mold

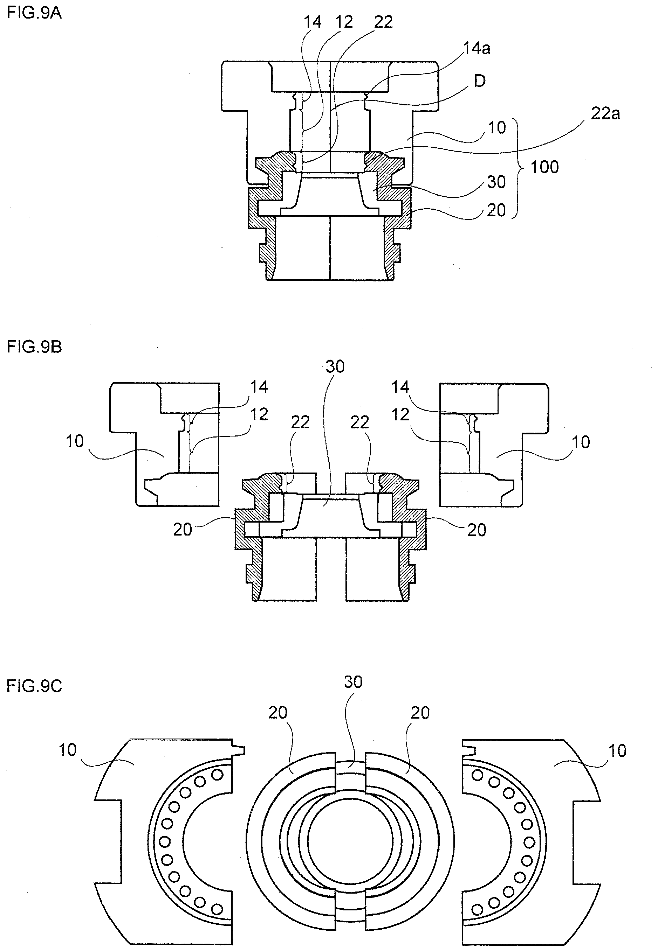

It is preferable that the mold 100 used in the invention includes the mold bases 10 and the mouth molds 20, each of which are divided as two parts, and a guide ring 30 that is received in the mouth molds 20 so as to be slidable on contact surfaces between the mouth molds 20 and itself when the mouth molds 20 are opened and closed, as illustrated in Figs. 9A to 9C.

Meanwhile, Fig. 9A is a cross-sectional view that is obtained when the mold 100 is cut along a plane orthogonal to a cross-section where the mold 100 is divided into two parts and is opened and the cut surface thereof is viewed from the front.

Further, Fig. 9B is a cross-sectional view illustrating a state in which the mold 100 illustrated in Fig. 9A is divided into two parts and is opened.

Furthermore, Fig. 9C is a plan view of the mold 100 illustrated in Fig. 9B that is divided into two parts and is opened.

Each of the mold bases 10, the mouth molds 20, and the guide ring 30 will be specifically described.

### (1)-1. Mold base

As illustrated in Figs. 9A to 9C, the mold bases 10 use in the invention are mold members that are used to mold the outer peripheral shapes of the body portion and the second mouth portion of the glass container.

The mold bases 10 have a parting line D where the mold bases are divided as two parts and are opened, and each of the mold bases 10 includes a body portion-molding portion 12 that is formed of an inner peripheral surface used to mold the outer peripheral shape of the body portion of the glass container.

Further, above the body portion-molding portion 12, each of the mold bases 10 includes an opening in which a gob is put, and a recess, in which the funnel or the baffle is fitted, is formed at such opening.

Furthermore, on the side to which the baffle is fitted, an inner wall of an end portion at the opening forms a second mouth portion-molding portion 14 that is formed of an inner peripheral surface used to mold the outer peripheral shape of the second mouth portion. Accordingly, when the second mouth portion is adapted to be screwed to a cap member, the second mouth portion-molding portion 14 is provided with grooves 14a that are used to mold threads.

Further, the mold bases also include openings which are formed below the body portion-molding portions 12 and are used to integrate the upper portions of the mouth molds by pinching the upper portions of the mouth molds from both sides. The upper openings, the molding portions such as the body portion-molding portions 12, and the lower openings communicate with each other.

Meanwhile, the size and shape of the mold base may be appropriately selected so as to correspond to the size and shape of a glass container to be manufactured.

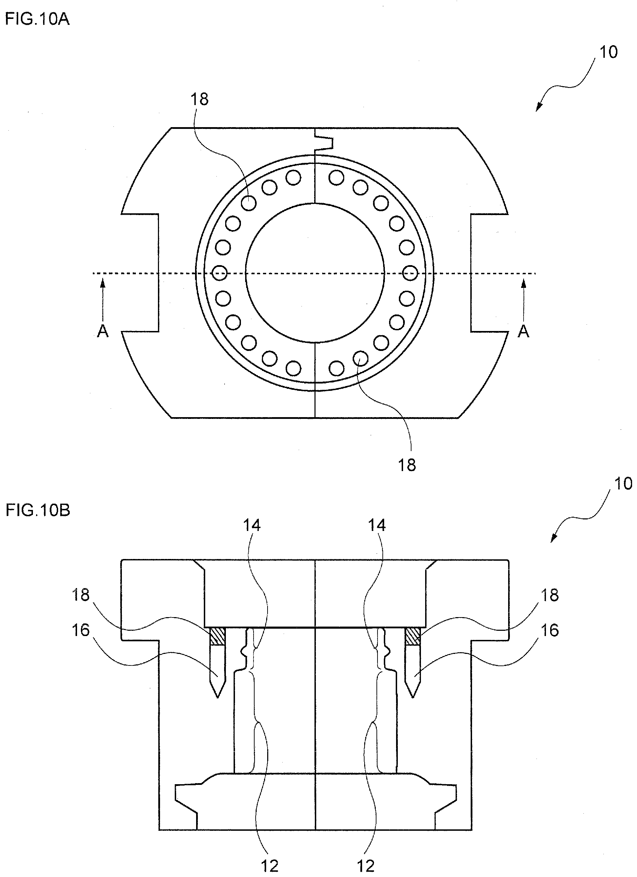

Further, cavities 16 formed by hermetically sealing air are provided so as to surround the inner walls of the end portions of the upper openings of the mold bases 10 on the side to which the baffle is fitted, that is, the second mouth portion-molding portions 14 as illustrated in Figs. 10A and 10B.

The reason for this is that the second mouth portion may be more stably molded through the improvement of the heat-retaining property of the second mouth portion-molding portions 14 by forming the cavities 16.

That is, the reason for this is that the generation of defects, such as wrinkles and cracks, generated by a drop in temperature may be effectively prevented since the temperature of the finished-shaped glass container may be stably retained by the cavities 16.

Further, after holes, which have a diameter in the range of 4 to 8 mm and a depth in the range of about 10 to 20 mm, are formed in the mold bases at an interval in the range of 1.5 to 5 mm from the upper side toward the lower side so as to surround the second mouth portion-molding portions 14, the holes are hermetically sealed by bolts 18 or the like. As a result, the cavities 16 are formed.

Meanwhile, Fig. 10A is a plan view of the mold bases 10 and Fig. 10B is a cross-sectional view that is obtained when the mold bases 10 are vertically cut along a dotted line A-A illustrated in Fig. 10A and the cut surface thereof is viewed in a direction of an arrow.

Furthermore, materials, which have been known well in the related art, may be used as the material of the mold base, and the material of the mold base is not particularly limited. However, the material of the mold base may typically be iron, an iron alloy, brass, or a copper-nickel alloy.

### (1)-2. Mouth mold

As illustrated in Figs. 9A to 9C, the mouth molds 20 used in the invention are mold members that are used to mold the outer peripheral shape of the first mouth portion of the glass container.

The mouth molds 20 have a parting line D where the mouth molds are divided as two parts and are opened, and each of the mouth molds 20 includes a first mouth portion-molding portion 22 that is formed on the inner wall of an opening of the upper surface thereof and is formed of an inner peripheral surface used to mold the outer peripheral shape of the first mouth portion of the glass container. Accordingly, when the first mouth portion is adapted to be screwed to a cap member, the first mouth portion-molding portion 22 is provided with grooves 22a that are used to mold threads.

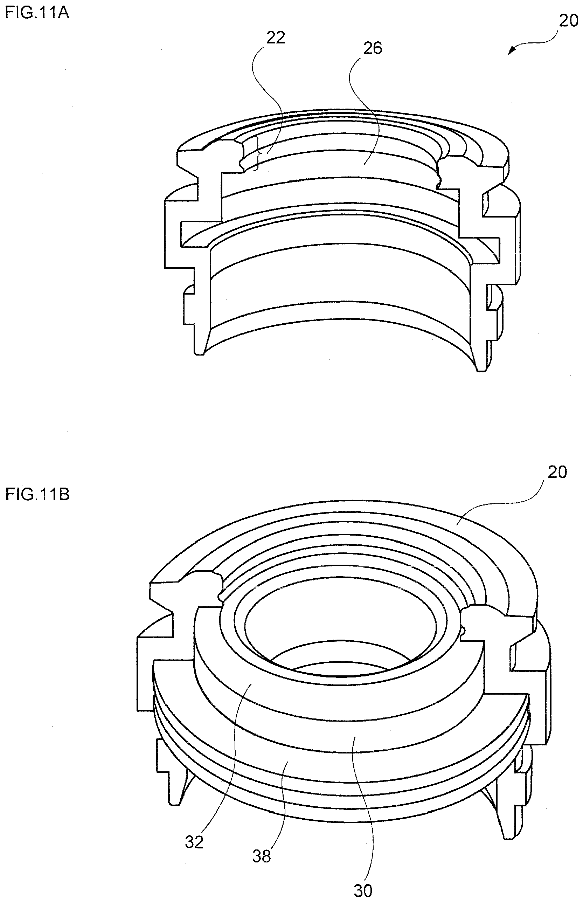

Further, as illustrated in Figs. 11A and 11B, each of the mouth molds 20 includes a guide ring receiving portion 26 that is formed below the opening of the upper surface and receives the guide ring 30 so that the guide ring 30 is slidable on the contact surface between the mouth mold 20 and the guide ring 30 when the mouth molds 20 are opened and closed.

Furthermore, each of the mouth molds 20 also includes an opening that is formed below the guide ring receiving portion 26 and serves as an entrance when the plunger is inserted. The opening of the upper surface, the guide ring receiving portion 26, and the lower opening communicate with each other.

Moreover, as illustrated in Figs. 9A to 9C, projecting parts, which are pinched from both sides thereof by the mold bases 10 and are fitted to the mold bases 10 so as to be integrated with the mold bases 10, are formed at upper portions of the outer peripheral surfaces of the mouth molds 20.

Meanwhile, Fig. 11A is a perspective view of one mouth mold 20 of the two divided mouth molds 20 viewed from the inner peripheral side, and Fig. 11B is a perspective view illustrating a state in which the guide ring 30 is received in the guide ring receiving portion 26 of the mouth mold illustrated in Fig. 11A.

Further, materials, which have been known well in the related art, may be used as the material of the mouth mold, and the material of the mouth mold is not particularly limited. However, the material of the mouth mold may typically be iron, an iron alloy, brass, or a copper-nickel alloy.

### (1)-3. Guide ring

It is preferable that the mouth molds 20 used in the invention receive the guide ring 30 therein as illustrated in Figs. 9A to 9C.

The guide ring 30 is a member that accurately guides the movement of the plunger when the molding surface portion of the plunger is completely inserted into the gob.

Further, the guide ring 30 is also a mold member that is used to mold the end face of the first mouth portion of the glass container.

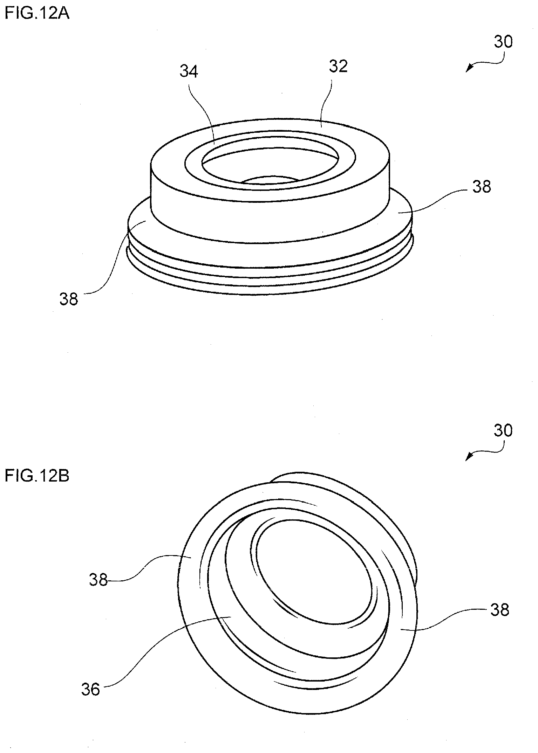

Furthermore, as illustrated in Figs. 12A and 12B, the guide ring 30 includes an opening formed at an upper surface 32 thereof and the planar shape of the opening is the same as the planar shape of a root of the molding surface portion of the plunger.

Accordingly, when the molding surface portion of the plunger is completely inserted into the gob, the guide ring 30 may accurately guide the movement of the plunger.

Meanwhile, Fig. 12A is a perspective view of the guide ring 30 and Fig. 12B is a perspective view of the guide ring 30 that is viewed from the lower side.

Further, materials, which have been known well in the related art, may be used as the material of the guide ring, and the material of the guide ring is not particularly limited. However, the material of the guide ring may typically be iron, an iron alloy, brass, or a copper-nickel alloy as in the case of the material of the mold base.

Furthermore, the guide ring 30 includes an end face-molding portion 34 that is formed at an upper portion of the inner wall of the opening of the upper surface 32 and is used to mold the end face of the first mouth portion of the glass container.

Moreover, a pedestal receiving portion 36, in which a pedestal portion of the plunger is received when the molding surface portion of the plunger is completely inserted into the gob, is formed at the guide ring below the opening of the upper surface 32.

Further, as illustrated in Fig. 11B, the guide ring 30 is received in the mouth molds 20 so as to be slidable on contact surfaces between the mouth molds 20 and itself when the mouth molds 20 are opened and closed.

More specifically, the upper surface 32 of the guide ring 30 and the upper surface and the lower surface of the protruding portion 38, which is formed on a lower portion of the outer peripheral surface of the guide ring 30 so as to protrude outward, are received in the mouth molds 20 so as to be slidable on the contact surfaces corresponding to the inner walls of the guide ring receiving portions 26 of the respective mouth molds 20.

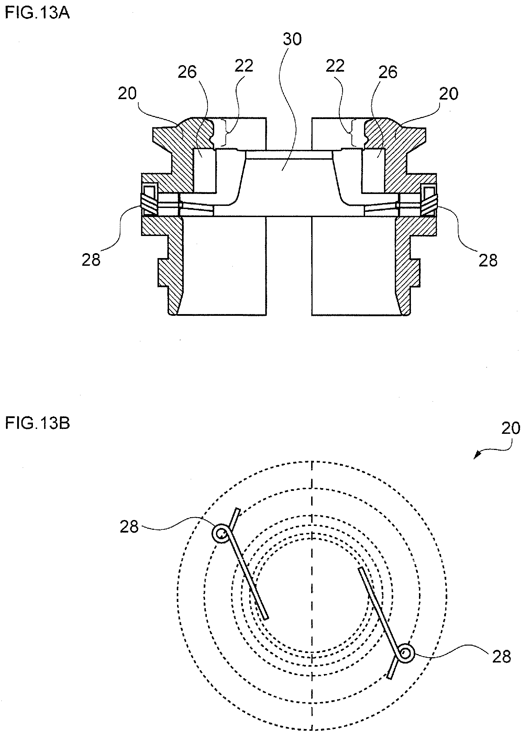

Furthermore, it is preferable that the guide ring 30 is received in the mouth molds 20 so as to be urged by spring members 28 as illustrated in Figs. 13A and 13B.

Moreover, as illustrated in Fig. 7B, in the step (F), it is preferable that the mouth molds 20 are divided as two parts and are opened, and the finished-shaped glass container 200' is made to drop by its own weight and is placed on the bottom mold 82 of the cooling mold 80 while the drop position of the finished-shaped glass container 200' is centered by the guide ring 30.

The reason for this is that the finished-shaped glass container 200' obtained in the step (C) may be stably transported to the cooling mold 80.

Here, since the end face-molding portion 34, which is used to mold the end face of the first mouth portion of the glass container, is formed at the upper portion of the inner wall of the opening of the upper surface 32 of the guide ring 30 as illustrated in Fig. 12A (when the finished-shaped glass container is transported to the cooling mold 80, the mouth molds 20 are rotated by an angle of 180° by the arm, so that the upper portion of the inner wall of the opening of the upper surface becomes "a lower portion of an inner wall of an opening of a lower surface"), the guide ring 30 and the finished-shaped glass container 200' are slightly fitted to each other.

Accordingly, the guide ring 30 is centered by the spring members 28, so that the finished-shaped glass container 200' is also centered at the same time.

Meanwhile, Fig. 13A is a cross-sectional view of the mouth molds 20, which receive the guide ring 30, taken along a vertical direction, and Fig. 13B is a plan view of the mouth molds 20.

### (2) Plunger

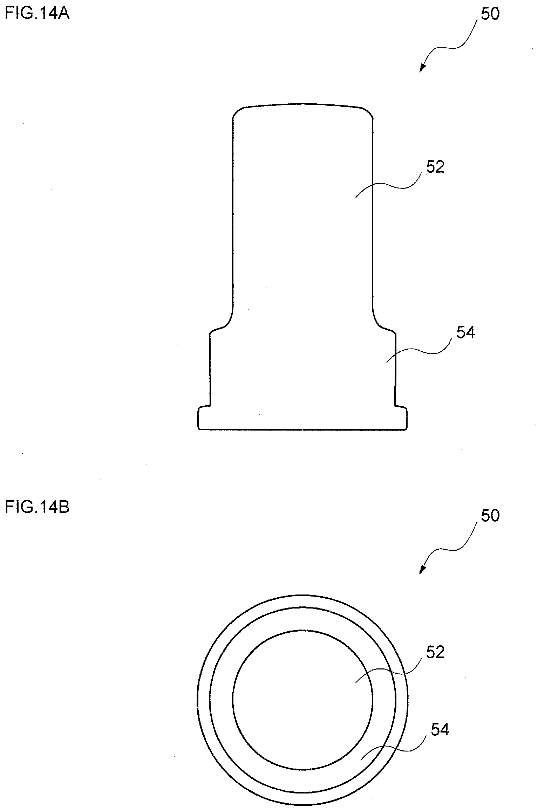

As illustrated in Figs. 14A and 14B, the plunger 50 used in the invention is a member that is inserted into the mold from the lower side of the mold and is used to mold the inner peripheral surface of the first mouth portion of the glass container.

The plunger 50 includes the molding surface portion 52 that is a portion directly molding the inner peripheral surface of the first mouth portion and a pedestal portion 54 that serves as the foundation of the molding surface portion 52.

Further, the shape of the molding surface portion 52 is not particularly limited as long as the molding surface portion 52 is extracted without the deformation of the finished-shaped glass container. It is preferable that the planar shape of the molding surface portion 52 is, for example, a circular shape, an elliptical shape, or a polygonal shape.

Furthermore, since the size of the plunger also varies according to the size of the glass container to be manufactured, the size of the plunger is not particularly limited. However, usually, it is preferable that the maximum diameter of the molding surface portion of the plunger is set to a value within the range of 10 to 50 mm and it is preferable that the length of the molding surface portion of the plunger is set to a value within the range of 10 to 50 mm.

Meanwhile, Fig. 14A is a front view of the plunger 50 and Fig. 14B is a plan view of the plunger 50.

Further, materials, which have been known well in the related art, may be used as the material of the plunger, and the material of the plunger is not particularly limited. However, the material of the plunger may typically be iron, an iron alloy, brass, or a copper-nickel alloy as in the case of the material of the mold base.

### (3) Funnel

As illustrated in Fig. 2, the funnel 72 used in the invention is a member that is fitted to the upper openings of the mold bases to stably put the gob 70 in the mold 100.

The funnel has the shape of a cylinder of which both end portions are opened, and it is preferable that the area of an opening formed at an upper end of the funnel is larger than that of an opening formed at a lower end of the funnel.

Further, as for the material of the mold base, the material of the funnel may typically be iron, an iron alloy, brass, or a copper-nickel alloy.

### (4) Baffle

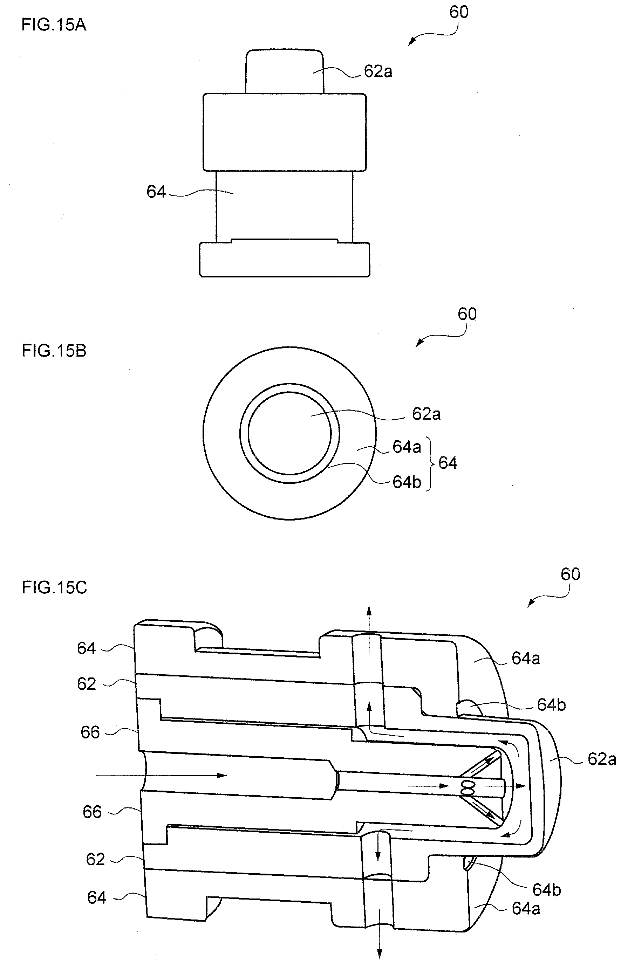

As illustrated in Fig. 15A and 15B, the baffle 60 used in the invention is a member that is inserted into the mold from the upper side of the mold and is used to mold the inner peripheral surface of the second mouth portion of the glass container.

Accordingly, unlike a normal baffle, the baffle 60 used in the present invention includes the convex molding surface portion 62a in order to mold the inner peripheral surface of the second mouth portion of the glass container.

More specifically, only the convex molding surface portion 62a is inserted to a depth corresponding to the second mouth portion-molding portion and the body portion-molding portion formed in the mold base, and other portions of the baffle are fitted to the recess of the mold base or are completely exposed to the outside. Accordingly, other portions of the baffle are not inserted into the mold base.

Meanwhile, Fig. 15A is a front view of the baffle 60 and Fig. 15B is a plan view of the baffle 60.

Further, as illustrated in Fig. 15C, it is preferable that the baffle 60 is formed by fitting a rod-like member 62, which includes the convex molding surface portion 62a, to a cylindrical member 64 so that only the convex molding surface portion 62a is exposed to the outside, the inner peripheral surface of the second mouth portion is molded by the convex molding surface portion 62a, and the end face of the second mouth portion is molded by an end face 64a on the side of the cylindrical member 64 where the convex molding surface portion 62a is exposed.

The reason for this is that the end face of the second mouth portion may be more accurately molded since an annular end face-molding portion 64b used to mold the end face of the second mouth portion may be easily formed on the end face 64a on the side of the cylindrical member 64 where the convex molding surface portion 62a is exposed when this structure is employed.

Meanwhile, Fig. 15C is a cross-sectional view of the baffle 60 taken along a vertical direction.

That is, the annular end face-molding portion 64b, which is used to mold the end face of the second mouth portion, is an annular groove that comes into contact with the convex molding surface portion 62a and surrounds the convex molding surface portion 62a, and the bottom of the annular end face-molding portion 64b needs to be accurately formed to achieve the roundness or the like of the end face of the second mouth portion.

Accordingly, if the convex molding surface portion 62a and the end face 64a are formed as one piece, the convex molding surface portion 62a stands in the way in three dimensions. For this reason, it is technically very difficult to form the annular end face-molding portion 64b on the end face 64a.

Meanwhile, when the baffle 60 is adapted to include the rod-like member 62 including the convex molding surface portion 62a and the cylindrical member 64, the annular end face-molding portion 64b may be easily and accurately formed on the end face 64a of the cylindrical member 64 without being obstructed by the convex molding surface portion 62a.

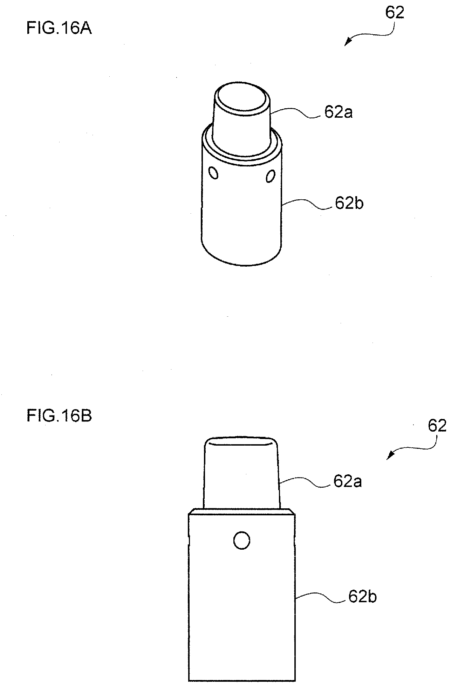

Further, it is preferable that the rod-like member 62 includes the convex molding surface portion 62a and a non-molding surface portion 62b of which the diameter is larger than the diameter of the convex molding surface portion 62a as illustrated in Figs. 16A and 16B.

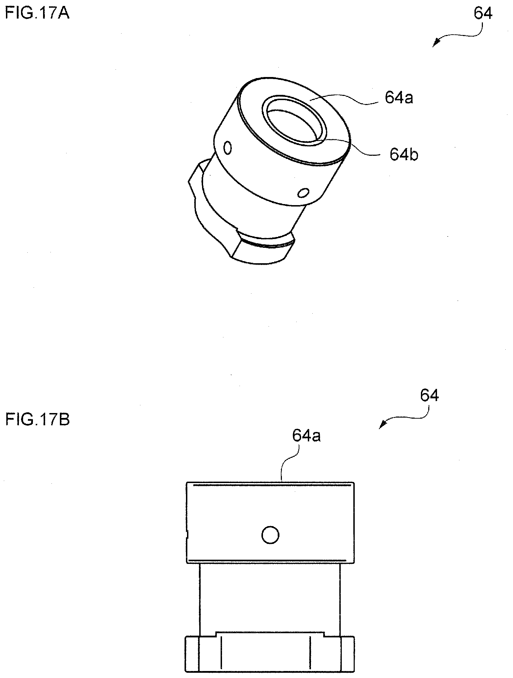

With this structure, a stepped portion is formed on the rod-like member 62. Accordingly, the rod-like member 62 may be fitted to the cylindrical member 64 illustrated in Figs. 17A and 17B so that only the convex molding surface portion 62a is exposed to the outside.

Furthermore, as illustrated in Figs. 17A and 17B, it is preferable that the cylindrical member 64 includes an opening formed at the end face 64a so as to have the same planar shape as the convex molding surface portion 62a and that the annular end face-molding portion 64b is formed so as to surround the opening.

Further, it is preferable that the diameter of the inner space of the cylindrical member 64 is set to a value larger than the diameter of the opening formed at the end face 64a so that the cylindrical member 64 is fitted to the stepped portion of the rod-like member 62.

Meanwhile, Fig. 16A is a perspective view of the rod-like member 62 and Fig. 16B is a front view of the rod-like member 62.

Fig. 17A is a perspective view of the cylindrical member 64 and Fig. 17B is a front view of the cylindrical member 64.

Further, the shape of the convex molding surface portion 62a is not particularly limited as long as the convex molding surface portion 62a is extracted without the deformation of the finished-shaped glass container. It is preferable that the planar shape of the convex molding surface portion 62a is, for example, a circular shape, an elliptical shape, or a polygonal shape.

Furthermore, since the size of the convex molding surface portion 62a also varies according to the size of a glass container to be manufactured, the size of the convex molding surface portion 62a is not particularly limited. However, usually, it is preferable that the maximum diameter of the convex molding surface portion is set to a value within the range of 10 to 50 mm and it is preferable that the length of the convex molding surface portion is set to a value within the range of 10 to 50 mm.

Moreover, as illustrated in Fig. 15C, it is preferable that a cylindrical cooling member 66, which includes a plurality of blow-off holes and is made of stainless steel, is received in the rod-like member 62.

The reason for this is that the inner peripheral surface of the second mouth portion may be more stably molded since the convex molding surface portion 62a is efficiently cooled from the inside of the baffle 60 when this structure is employed.

Since the cylindrical cooling member 66 is received, as illustrated in Fig. 15C, the blown air is discharged to the outside through discharge holes, which are formed on the side portions of the rod-like member 62 and the cylindrical member 64, without obstructing the flow of cooling air to be newly blown while cooling air is blown to the inner surface of the convex molding surface portion 62a.

Meanwhile, this cooling mechanism may also be provided in the above-mentioned plunger.

Further, the material of the baffle may typically be iron, an iron alloy, brass, or a copper-nickel alloy as for the material of the mold base.

### (5) Blow head

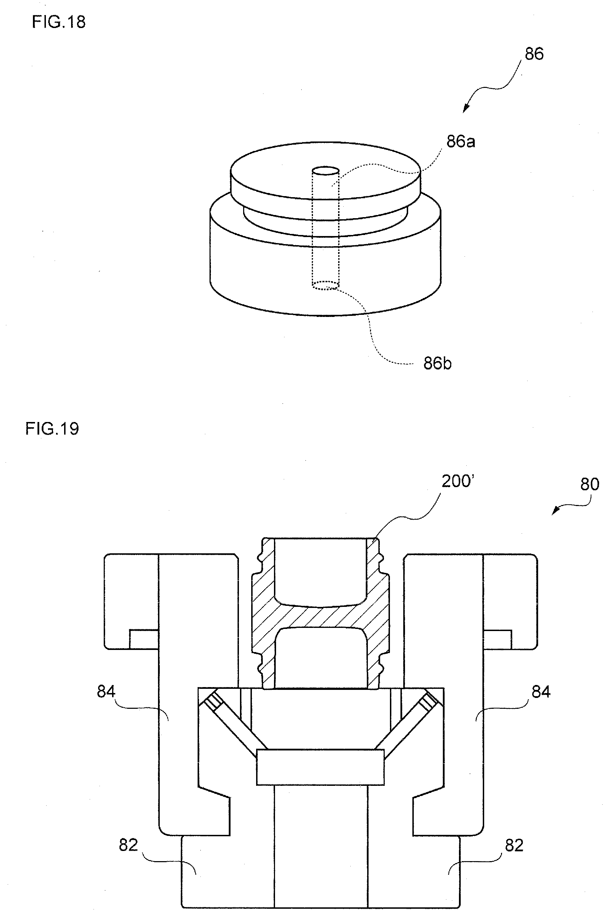

Furthermore, the blow head 86 illustrated in Fig. 18 is a member that efficiently sends first cooling air 96 into the finished-shaped glass container 200' received at a predetermined position in a cooling mold 80 to be described below as illustrated in Fig. 7C.

As illustrated in Fig. 18, the blow head 86 includes a blowing hole 86a that sends the first cooling air 96 and an outlet (first outlet) 86b that blows the first cooling air 96 into the finished-shaped glass container 200'. As illustrated in Fig. 7C, the blow head 86 is disposed so as to be spaced apart from the mouth portion of the finished-shaped glass container 200'.

Accordingly, the first cooling air 96, which is sent through the blowing hole 86a, is supplied into the finished-shaped glass container 200' through the first outlet 86b, and the first cooling air 96 that is blown can be efficiently discharged to the outside from a gap that is formed between the blow head 86 and the mouth portion of the finished-shaped glass container 200'.

Accordingly, the finished-shaped glass container 200' may be efficiently cooled from the inner surface side thereof without being expanded by blown air like in the blow-and-blow molding or the press-and-blow molding.

Further, according to the blow head 86 disposed as described above, a discharge hole for the first cooling air 96 does not need to be formed in the blow head 86. Accordingly, machining to be performed in the blow head 86 can be simplified.

Furthermore, the blow head 86 may be made, for example, of an iron alloy, brass, or a copper-nickel alloy, as in the case of the above-mentioned mold base and the like.

Meanwhile, Fig. 18 is a perspective view of the blow head 86.

### (6) Cooling mold

Further, the cooling mold 80 illustrated in Fig. 19 is a mold that holds the finished-shaped glass container 200' therein and is used to cool the finished-shaped glass container 200'.

As illustrated in Fig. 19, the cooling mold 80 includes the finishing molds 84 that surround the peripheral surface of the finished-shaped glass container 200' and the bottom mold 82 on which the second mouth portion of the finished-shaped glass container 200' is placed.

The cooling mold 80, unlike the mold 100, is a mold only for cooling the finished-shaped glass container 200' and does not come into direct contact with the side surface of the finished-shaped glass container 200', and is typically made, for example, of a casting, an iron alloy, or brass. The shape of the cooling mold 80 may also be appropriately changed according to the external shape of the glass container to be manufactured.

Meanwhile, Fig. 19 is a cross-sectional view of the cooling mold 80 taken along a vertical direction.

Further, the bottom mold 82 is a member on which the second mouth portion of the finished-shaped glass container 200' is placed.

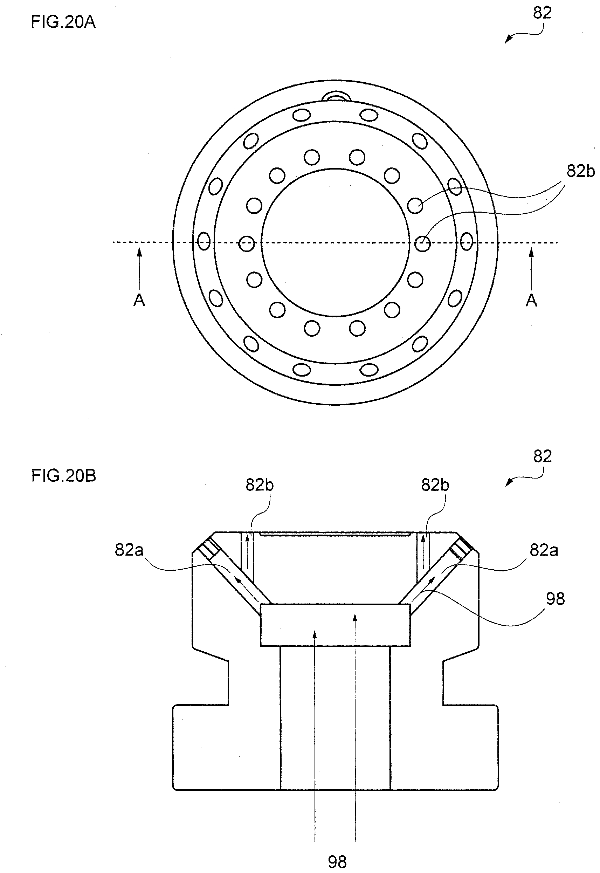

As illustrated in Figs. 20A and 20B, the bottom mold 82 includes blowing holes 82a that send second cooling air 98 and second outlets 82b that blow the second cooling air 98 from the lower side of the finished-shaped glass container 200' to allow the second cooling air 98 to pass through gaps between the outer peripheral surface of the finished-shaped glass container 200' and the finishing molds.

Meanwhile, Fig. 20A is a plan view of the bottom mold 82 and Fig. 20B is a cross-sectional view that is obtained when the bottom mold 82 illustrated in Fig. 20A is vertically cut along a dotted line A-A and the cut surface thereof is viewed in a direction of an arrow.

According to the cooling mold 80 including the finishing molds 84 and the bottom mold 82, since the second cooling air 98 can be blown in a predetermined direction (the vertical direction) from the second outlets 82b that are provided below the finished-shaped glass container 200', air is not directly blown to the finished-shaped glass container 200'.

Accordingly, the deformation of the finished-shaped glass container 200', which is caused by the pressure or the like of the second cooling air 98, may be effectively prevented.

Further, since the second cooling air 98, which is blown from the second outlets 82b, is allowed to pass through the gaps between the finished-shaped glass container 200' and the finishing molds 84, the finished-shaped glass container 200' may be efficiently and uniformly cooled from the inner peripheral surface and the outer peripheral surface thereof by the second cooling air 98 together with the first cooling air 96.

Furthermore, regardless of the state or temperature of the inner peripheral surface of the finishing mold 84, unnecessary unevenness is not formed on the surface of a glass container 200 to be obtained. Accordingly, the quality of the glass container 200 to be obtained may be improved.

According to the invention, since a predetermined one-press manufacturing method is used as described above in detail, it is possible to manufacture a glass container, which includes mouth portions formed at both end portions thereof facing each other, by integrally molding the glass container from the beginning, without separately manufacturing portions including the mouth portions and integrating these portions. Accordingly, it is expected that a typical glass container of the invention will significantly contribute to the extension of the use and function of glass containers and their diversification of designability.

### EXPLANATIONS OF LETTERS OR NUMERALS

- 10: mold base
- 12: body portion-molding portion
- 14: second mouth portion-molding portion
- 14a: groove
- 16: cavities
- 18: bolt
- 20: mouth mold
- 22: first mouth portion-molding portion
- 22a: groove
- 26: guide ring receiving portion
- 28: spring member
- 30: guide ring
- 32: upper surface of guide ring
- 34: end face-molding portion
- 36: pedestal receiving portion
- 38: protruding portion
- 50: plunger
- 52: molding surface portion of plunger
- 54: pedestal portion
- 60: baffle
- 62: rod-like member
- 62a: convex molding surface portion
- 62b: non-molding surface portion
- 64: cylindrical member
- 64a: end face
- 64b: annular end face-molding portion
- 66: cylindrical cooling member
- 70: gob
- 72: funnel
- 80: cooling mold
- 82: bottom mold
- 82a: bottom mold blowing hole
- 82b: second outlet
- 84: finishing mold
- 86: blow head
- 86a: blow head blowing hole
- 86b: outlet (first outlet)
- 96: first cooling air
- 98: second cooling air
- 100: mold
- 200: glass container
- 202: first mouth portion
- 204: second mouth portion
- 206: body portion
- 200': finished-shaped glass container
- 202': first mouth portion
- 204': second mouth portion
- 206': body portion
- 300: individual section machine (IS machine)

## Claims

1. A one-press manufacturing method of a glass container that includes a first mouth portion and a second mouth portion formed at both end portions thereof facing each other, the one-press manufacturing method comprising the following steps (A) to (F):
(A) a step of fitting a funnel to a mold and then putting a gob in the mold through the funnel;
(B) a step of removing the funnel from the mold and then fitting a baffle, which includes a convex molding surface portion, to the mold so that the convex molding surface portion is inserted into the mold;
(C) a step of simultaneously molding an inner peripheral surface of the first mouth portion, which is formed by a molding surface portion of a plunger, and an inner peripheral surface of the second mouth portion, which is formed by the molding surface portion of the baffle, to mold a finished-shaped glass container from the gob by inserting the plunger into the mold from a side opposite to the side to which the baffle is fitted, and pressing the gob;
(D) a step of extracting the plunger from the finished-shaped glass container;
(E) a step of removing the baffle from the mold while extracting the convex molding surface portion from the finished-shaped glass container;
(F) a step of transporting the finished-shaped glass container to a cooling mold and cooling the finished-shaped glass container,
wherein the mold includes a mold base and a mouth mold, each of which is divided into two parts, and
in the step (C), an outer peripheral shape of the first mouth portion is molded by the mouth mold, and
an outer peripheral shape of the second mouth portion is molded by an inner wall of an end portion of the mold base on the side to which the baffle is fitted, and
wherein cavities formed by hermetically sealing air are provided so as to surround the inner wall of the end portion of the mold base on the side to which the baffle is fitted.

2. The one-press manufacturing method of a glass container according to claim 1,
wherein the baffle is formed by fitting a rod-like member, which includes a convex molding surface portion, to a cylindrical member so that only the convex molding surface portion is exposed to the outside,
the inner peripheral surface of the second mouth portion is molded by the convex molding surface portion, and
an end face of the second mouth portion is molded by an end face on the side of the cylindrical member where the convex molding surface portion is exposed.

3. The one-press manufacturing method of a glass container according to claim 2,
wherein an opening is formed at the end face on the side of the cylindrical member where the convex molding surface portion is exposed so as to have the same planar shape as the convex molding surface portion, and an annular end face-molding portion is formed so as to surround the opening, and
in the step (C), the inner peripheral surface of the second mouth portion is formed by the convex molding surface portion, and the end face of the second mouth portion is formed by the end face-molding portion.

4. The one-press manufacturing method of a glass container according to claim 2 or 3,
wherein a cylindrical cooling member, which includes a plurality of blow-off holes for cooling with cooling air the convex molding surface portion from the inside of the baffle, is received in the rod-like member, and discharge holes for discharging cooling air outside of the baffle are formed on the side portions of the rod-like member and the cylindrical member.

## Patentansprüche

1. Ein-Pressen-Herstellungsverfahren für einen Glasbehälter, der einen ersten Mündungsabschnitt und einen zweiten Mündungsabschnitt enthält, die an beiden Endabschnitten davon einander gegenüberliegend ausgebildet sind, wobei das Ein-Pressen-Herstellungsverfahren die folgenden Schritte (A) bis (F) umfasst:
(A) ein Schritt des Passens eines Trichters an eine Form und des anschließenden Einführens eines Tropfens bzw. Glaspostens in die Form durch den Trichter;
(B) einen Schritt des Entfernens des Trichters aus der Form und anschließenden Passens einer Ablenkplatte, die einen konvexen Formflächenabschnitt enthält, an die Form, so dass der konvexe Formflächenabschnitt in die Form eingesetzt wird;
(C) einen Schritt des gleichzeitigen Formens einer inneren Umfangsfläche des ersten Mündungsabschnitts, der durch einen Formflächenabschnitt eines Kolbens ausgebildet wird, und einer inneren Umfangsfläche des zweiten Mündungsabschnitts, der durch den Formflächenabschnitt der Ablenkplatte ausgebildet wird, um einen fertig geformten Glasbehälter aus dem Tropfen bzw. Glasposten zu formen, indem der Kolben von einer Seite gegenüber der Seite, an der die Ablenkplatte gepasst ist, in die Form eingesetzt wird und der Tropfen bzw. Glasposten gedrückt wird;
(D) einen Schritt des Extrahierens des Kolbens aus dem fertig geformten Glasbehälter;
(E) einen Schritt des Entfernens der Ablenkplatte aus der Form, während der konvexe Formflächenabschnitt aus dem fertig geformten Glasbehälter extrahiert wird;
(F) einen Schritt des Transportierens des fertig geformten Glasbehälters zu einer Kühlform und des Kühlens des fertig geformten Glasbehälters;
wobei die Form eine Formbasis und eine Mündungsform enthält, von denen jede in zwei Teile unterteilt ist, und
wobei in dem Schritt (C) eine äußere Umfangsform des ersten Mündungsabschnitts durch die Mündungsform geformt wird, und
eine äußere Umfangsform des zweiten Mündungsabschnitts durch eine Innenwand eines Endabschnitts der Formbasis auf der Seite geformt wird, an welche die Ablenkplatte gepasst ist, und
wobei durch hermetisches Abschließen von Luft gebildete Hohlräume so bereitgestellt sind, dass sie die Innenwand des Endabschnitts der Formbasis auf der Seite umgeben, an welche die Ablenkplatte gepasst ist.

2. Ein-Pressen-Herstellungsverfahren eines Glasbehälters nach Anspruch 1,
wobei die Ablenkplatte durch Passen eines stabförmigen Elements, das einen konvexen Formflächenabschnitt enthält, an ein zylindrisches Element ausgebildet wird, so dass nur der konvexe Formflächenabschnitt nach außen freigelegt ist;
die innere Umfangsfläche des zweiten Mündungsabschnitts durch den konvexen Formflächenabschnitt geformt wird, und
wobei eine Endfläche des zweiten Mündungsabschnitts durch eine Endfläche an der Seite des zylindrischen Elements geformt wird, an welcher der konvexe Formflächenabschnitt freigelegt ist.

3. Ein-Pressen-Herstellungsverfahren eines Glasbehälters nach Anspruch 2,
wobei eine Öffnung an der Endfläche auf der Seite des zylindrischen Elements ausgebildet wird, wo der konvexe Formflächenabschnitt freigelegt ist, um die gleiche ebene Form wie der konvexe Formflächenabschnitt aufzuweisen, und ein ringförmiger Endflächenformteil so ausgebildet wird, dass er die Öffnung umgibt, und
in dem Schritt (C) die innere Umfangsfläche des zweiten Mündungsabschnitts durch den konvexen Formflächenabschnitt ausgebildet wird und die Endfläche des zweiten Mündungsabschnitts durch den Endflächenformabschnitt ausgebildet wird.

4. Ein-Pressen-Herstellungsverfahren eines Glasbehälters nach Anspruch 2 oder 3,
wobei ein zylindrisches Kühlelement, das eine Mehrzahl von Abblaselöchern zum Kühlen des konvexen Formflächenabschnitts von der Innenseite der Ablenkplatte mit Kühlluft enthält, in dem stabförmigen Element aufgenommen ist und Auslasslöcher zum Auslassen von Kühlluft außerhalb der Ablenkplatte an den Seitenabschnitten des stabförmigen Elements und des zylindrischen Elements ausgebildet sind.

## Revendications

1. Procédé de fabrication à une presse d'un récipient en verre comprenant une première partie de bec et une deuxième partie de bec confectionnées aux deux parties d'extrémité de celui-ci se faisant mutuellement face, le procédé de fabrication à une presse comprenant les étapes suivantes (A) à (F):
(A) une étape de raccord d'un entonnoir à un moule puis mise en place d'une paraison dans le moule par l'entonnoir;
(B) une étape d'enlèvement de l'entonnoir du moule puis raccord d'une chicane, qui comprend une partie de surface de moulage convexe, au moule pour que la partie de surface de moulage convexe soit insérée dans le moule;
(C) une étape de moulage simultané d'une surface périphérique interne de la première partie de bec, laquelle est formée par la partie de surface de moulage d'un plongeur, et une surface périphérique interne de la deuxième partie de bec, laquelle est formée par la partie de surface de moulage de la chicane, pour mouler un récipient en verre de forme finie de la paraison par insertion du plongeur dans le moule depuis un côté opposé au côté auquel est fixée la chicane, et pressage de la paraison;
(D) une étape d'extraction du plongeur du récipient en verre de forme finie;
(E) une étape d'enlèvement de la chicane du moule tout en extrayant la partie de surface de moulage convexe du récipient en verre de forme finie;
(F) une étape de transport du récipient en verre de forme finie vers un moule de refroidissement et refroidissement du récipient en verre de forme finie,
dans lequel le moule comprend une base de moule et un moule à bec, chacun d'eux étant divisé en deux parties, et
à l'étape (C), une forme périphérique externe de la première partie de bec est moulée par le moule à bec, et
une forme périphérique externe de la deuxième partie de bec est moulée par une paroi interne d'une partie d'extrémité de la base de moule sur le côté auquel la chicane est raccordée, et
dans lequel des cavités formées en scellant hermétiquement l'air sont procurées de manière à entourer la paroi interne de la partie d'extrémité de la base de moule sur le côté auquel est fixée la chicane.

2. Procédé de fabrication à une presse d'un récipient en verre selon la revendication 1,
dans lequel la chicane est formée par raccord d'un élément de type tige, qui comprend une partie de surface de moulage convexe, à un élément cylindrique de sorte que seule la partie de surface de moulage convexe est exposée à l'extérieur, la surface périphérique interne de la deuxième partie de bec est moulée par la partie de surface de moulage convexe, et
une face d'extrémité de la deuxième partie de bec est moulée par une face d'extrémité sur le côté de l'élément cylindrique où la partie de surface de moulage convexe est exposée.

3. Procédé de fabrication à une presse d'un récipient en verre selon la revendication 2,
dans lequel un orifice est formé à la face d'extrémité sur le côté de l'élément cylindrique où la partie de surface de moulage convexe est exposée de manière à présenter la même forme plane que la partie de surface de moulage convexe, et une partie de moulage de la face d'extrémité annulaire est formée de manière à entourer l'orifice, et
à l'étape (C), la surface périphérique interne de la deuxième partie de bec est formée par la partie de surface de moulage convexe, et la face d'extrémité de la deuxième partie de bec est formée par la partie de moulage de la face d'extrémité.

4. Procédé de fabrication à une presse d'un récipient en verre selon la revendication 2 ou 3,
dans lequel l'élément de refroidissement cylindrique, qui comprend une pluralité de trous à souffler pour refroidir avec de l'air de refroidissement la partie de surface de moulage convexe depuis l'intérieur de la chicane, est reçu dans l'élément de type tige, et les trous de décharge pour décharger l'air de refroidissement à l'extérieur de la chicane sont formés sur les parties latérales de l'élément de type tige et de l'élément cylindrique.
